# EUROPEAN PATENT SPECIFICATION

(11) **EP 4 153 378 B1**
(45) Date of publication and mention of the grant of the patent: **21.10.2026**
(21) Application number: 21808334.3
(22) Date of filing: 21.05.2021
(51) Int. Cl.: B23Q 11/00, B23Q 11/08, B23Q 1/54, B24B 19/06, B23Q 11/12, B23Q 11/14

(54) **HIGH PRECISION TEMPERATURE AND CONTAMINANT CONTROL FOR PRECISE MACHINE TOOL POSITIONING**
HOCHPRÄZISE TEMPERATUR- UND KONTAMINATIONSKONTROLLE ZUR GENAUEN POSITIONIERUNG EINER WERKZEUGMASCHINE
RÉGULATION DE TEMPÉRATURE ET DE CONTAMINANTS DE HAUTE PRÉCISION POUR LE POSITIONNEMENT PRÉCIS D'UNE MACHINE-OUTIL

(30) Priority: 21.05.2020 US 202063028470 P
(43) Date of publication of application: 29.03.2023
(73) Proprietor: Coventry Associates, Inc., West Boylston MA 01583 (US)
(72) Inventor: GARDNER, Craig, Martin, Boylston, MA 01583 (US); BLODGETT, David, Northbridge, MA 01534 (US)
(74) Representative: EDP Patent Attorneys B.V.
(86) International application number: PCT/US2021/033655
(87) International publication number: WO 2021/237089

(56) References cited:
- EP-A1- 3 597 335
- DE-U1- 29 522 019
- KR-A- 20050 070 739
- US-A1- 2004 176 017
- US-A1- 2006 135 043
- US-A1- 2007 232 196
- US-A1- 2007 232 196
- US-A1- 2019 070 699

## Description

### CROSS-REFERENCE TO RELATED APPLICATION(S)

This application claims the priority benefit, under 35 U.S.C. 119(e), of U.S. Application No. 63/028,470, which was filed on May 21, 2020.

### BACKGROUND

There are innumerable situations in which it is necessary to position an object automatically and properly in two or three dimensions. This need is common in the industrial world, in which machines are used to move objects in a reliable, repeatable manner. One example is the grinding of bearing races. Millions of bearing races are ground each year, using very carefully controlled grinding machines. Such machines need to move the grinding tool into and out of the grinding location (termed the "Z" direction), and toward and away from the bearing race (termed the "X" direction). They must also control the angular position of the grinding wheel relative to the race. Consequently, there are several positioning systems configured to accomplish two or three-axis motion of an object that can be coupled to the grinding machines.

U.S. Patent No. 7,803 034 discloses an eccentric positioning system (EPS) that can be used to move and position an object very precisely (e.g., within about 0.05 microns of a desired position) and very quickly (e.g., within 10 seconds) in two or three dimensions. For example, an EPS can be used to move a grinding wheel into and out of a grinding location and toward and away from a bearing race. It can also control the angular position of the grinding wheel with respect to the race. It does this with a set of rotary tables or rotary motion assemblies that are stacked on each other in an eccentric fashion; that is, when viewed from above or below, the rotary motion assemblies are not concentrically mounted. Patent Document KR 2005 0070739 A discloses a contaminant control system.

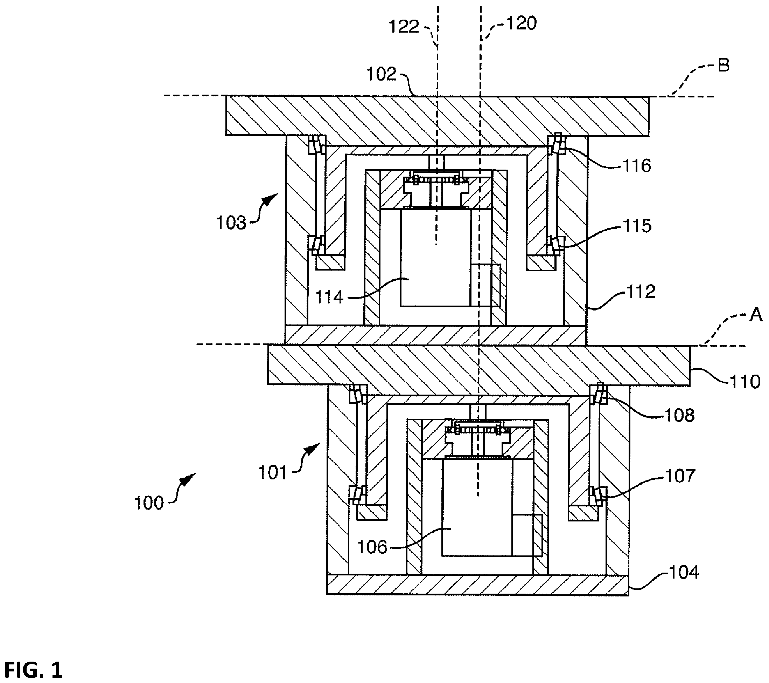

FIG. 1 is a cross-sectional view of an eccentric positioning system 100 with two rotary motion assemblies 101 and 103. Assemblies 101 and 103 may or may not be identical to one another (e.g., they may have identical or different diameters). Assembly 103 is coupled to rotated member 110 of assembly 101, so that assembly 103 is rotated about axis 120 by assembly 101. Assembly 101 comprises fixed member 104, and rotatable member 110 that is rotated by motor 106 (or another rotary motive device, such as a hydraulic actuator, that accomplishes rotary motion) about axis 120. Bearings 107 and 108 provide for such rotary motion. Rotation of member 110 thus causes eccentric motion of assembly 103 about axis 120. Rotatable member 102 of assembly 103 is itself rotatable about axis 122 relative to case 112 by motor 114 and bearings 115 and 116. The two rotary motions in parallel planes (plane A of assembly 101 and plane B of assembly 103) accomplishes two-axis motion of member 102 in plane B of member 102. Any object that is directly or indirectly coupled to member 102 and is not coincident with axis 122 is thus positionable in the plane of motion of the object, which in this case would be parallel to plane B. The motion of the device can follow any straight line or curvilinear path in this plane through proper control of the rotations of motors 106 and 114.

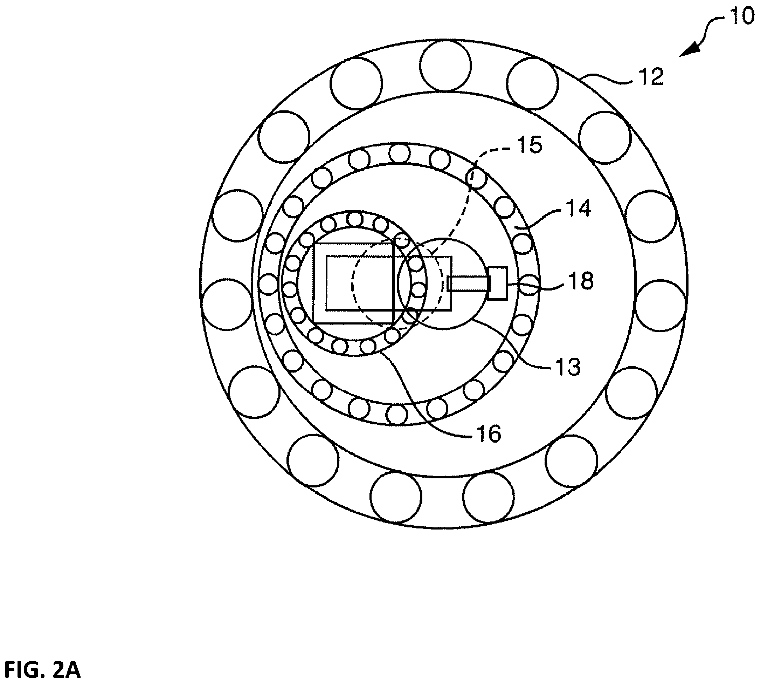

FIGS. 2A-2E illustrate how an eccentric positioning system 10 with three rotary motion assemblies can position an object 18 (for example, a grinding wheel) in the plane of the page. The rotary motion assemblies are modeled as three nested, non-concentric bearings that are coupled as shown in FIG. 2A and described below. Largest bearing 12 encompasses mid-size bearing 14 and smallest bearing 16. The bearings are eccentrically mounted such that they each can rotate about a different but parallel axis; as the rotations take place, these axes may become temporarily coincidental. The bearings are supported such that when the inner race of bearing 12 is rotated, bearings 14 and 16 (and any structures or objects supported by such bearings) are also moved about the axis of rotation of bearing 12. Similarly, when the inner race of bearing 14 is rotated, bearing 16 (and any structures or objects supported by bearing 16) move as well.

The object 18 is directly or indirectly coupled to the inner race of inner bearing 16. Solid circle 13 in FIG. 2A shows the path of the center of bearing 14 when bearing 12 is rotated. Dashed circle 15 in FIG. 2A shows the path of the center of bearing 16 when bearing 14 is rotated. Bearings 12 and/or 14 control the motion of tool 18 in the X-Z plane of its motion, which is parallel to the drawing page. Tool 18 is coupled to bearing 16 such that the tool is rotated about the axis of rotation of bearing 16. Bearing 16 thus controls the angular orientation (theta) of tool 18 in this plane. Bearing 16 affects the X and Z position as well as the angular orientation.

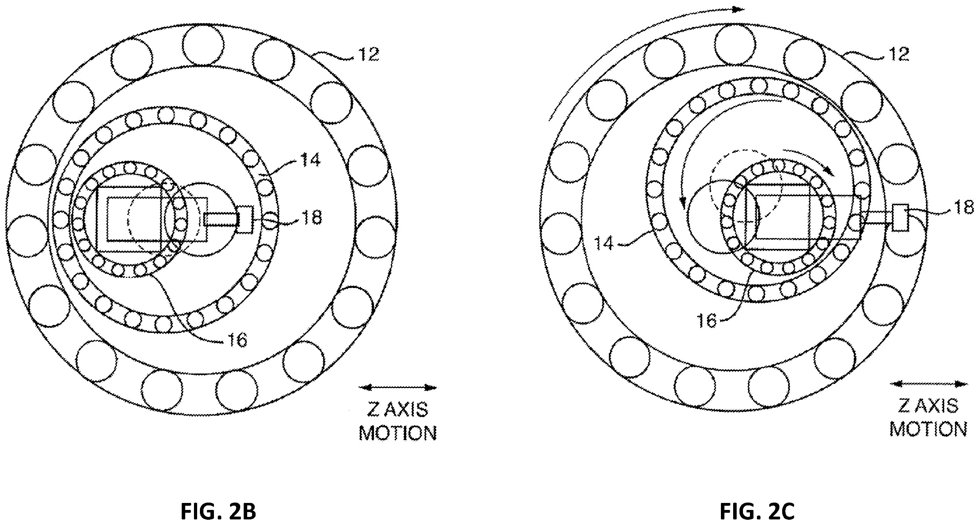

FIGS. 2B and 2C illustrate one specific example of the direction and extent in degrees of rotary motion of bearings 12, 14 and 16 that move object 18, in a generally straight line along the "Z" axis, from the start position shown in FIG. 2B to the end position shown in FIG. 2C. In this example, bearing 12 has an outer diameter (OD) of 43 inches (109.22 cm) and an inner diameter (ID) of 33.75 inches (85.725 cm). Bearing 14 has an OD of 25 inches (63.5 cm) and an ID of 21.25 inches (54 cm). Bearing 16 has an OD of 12.75 inches (32.385 cm) and an ID of 10 inches (25.4 cm). The motions include clockwise motion of large bearing 12 amounting to 138.7 degrees, counterclockwise motion of mid-size bearing 14 of 277.2 degrees, and clockwise motion of smallest bearing 16 of 138.5 degrees. These rotary motions cause the object 18 to move 13.963 inches (35.446 cm) in the "Z" direction. Tool 18 has the same angular orientation at the start and end of this motion, as shown in the drawings. The motions can take place simultaneously or sequentially. The motions are controlled appropriately by the system controller. In situations in which the path of motion is important, straight-line or other purposeful, directed object motion can be accomplished.

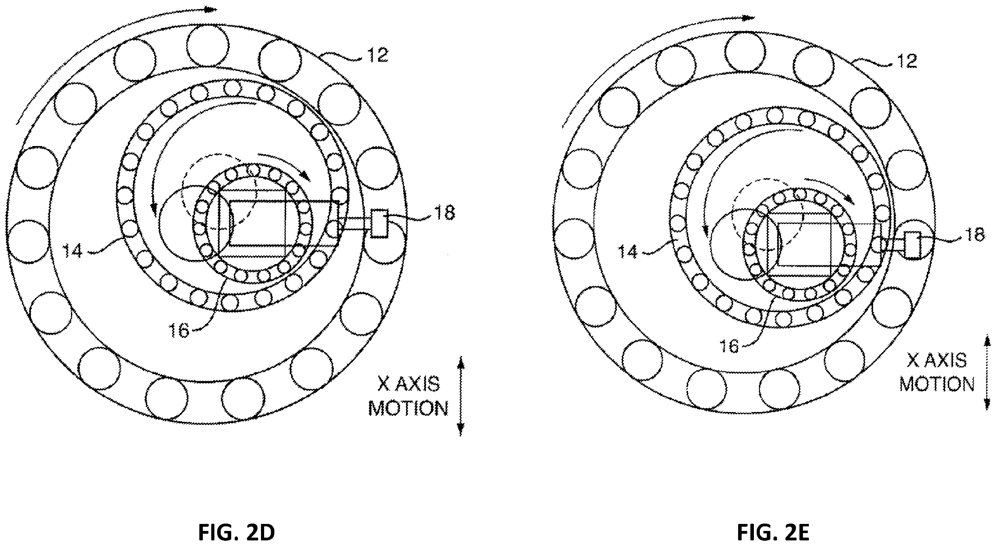

FIGS. 2D and 2E illustrate the motions that move object 18 from the start position shown in FIG. 2B to the position shown in FIG. 2D (which is the same as that shown in FIG. 2C), and also down 2.88 inches (7.3152 cm) in the "X" direction. To maintain single-axis linear motion, the overall positioning can take place in two steps-the Z axis motion shown in FIGS. 2B and 2C, and then the X axis motion shown in FIGS. 2D and 2E, in either order. The total (absolute) rotational motion of the inner races of bearings 12, 14 and 16, respectively, are: clockwise 173.5 degrees, counterclockwise 294 degrees, and clockwise 120.4 degrees. Straight-line motion is not a constraint of an eccentric positioning system, as other motion paths can be accomplished by proper control of the two or more relative rotations.

### SUMMARY

The eccentric positioning systems described above have several moving parts that are coupled together, with gaps, slits, or other openings between the moving parts (e.g., between the stacked rotary motion assemblies). If contaminants infiltrate the openings in an eccentric positioning system, they can damage the system in several ways. For example, if contaminants reach bearings, gears, motors, or other precision moving parts in the eccentric positioning system, the contaminants can become jammed or embedded between the moving parts, preventing the moving parts from moving properly. Contaminants can also interfere with or block sensors, such as optical encoders, that are used to monitor the positions of the rotary motion assemblies, making the sensor readings faulty or inaccurate. If unchecked, the presence of contaminants in a machine tool can result in substantially decreased accuracy and, eventually, failure of the machine tool.

Contaminants are particularly problematic in environments where eccentric positioning systems are used for machining. For instance, when an eccentric positioning system is used for grinding bearing races, the grinding operation generates swarf, which may take the form of fine chips and/or long, stringy tendrils of material removed from the workpiece. Other machining operations may generate other small pieces of debris, including chips, turnings, filings, and/or shavings. These small pieces of debris can mix with fluid, such as water or oil, and work its way into the bearings and/or optical encoders in an eccentric positioning system, degrading the eccentric positioning system's positioning precision.

Embodiments of the present technology include a positioning system. The positioning system includes a first rotary motion table and a gas source. The first rotary motion table comprises a first base, a first platform rotatably coupled to the first base, and a first motor to rotate the first platform about a first axis. The gas source is in fluid communication with a first cavity between the first platform and the first base. The gas source pressurizes the first cavity. The gas flows out of the first cavity through a first channel between the first base and the first platform to prevent ingress of particles into the first cavity.

The positioning system may include a second rotary motion table comprising a second base fixed to the first platform, a second platform rotatably coupled to the second base, and a second motor to rotate the second platform about a second axis parallel to the first axis. The first platform and the second base may form a conduit connecting the first cavity with a second cavity between the first platform and the first base. The gas source may be in fluid communication with the second cavity via the first cavity and the conduit and may be configured to pressurize the second cavity.

The positioning system may further include a tool. The tool may be disposed on the second platform. The tool may be configured to be positioned relative to a workpiece by the first rotary motion table and the second rotary motion table. The tool may machine the workpiece. Pressurization of the first cavity and the second cavity by the gas source may prevent swarf generated by machining the workpiece from entering the first cavity or the second cavity. The gas may flow out of the first cavity through the first channel between the first base and the first platform and out of the second cavity through a second channel between the second base and the second platform.

The positioning system may further include an air conditioner. The air conditioner may be in fluid communication with the gas source. The air conditioner may heat and/or cool the gas flowing into the first cavity. The positioning system may further include a temperature sensor and a controller. The temperature sensor may be in thermal communication with the first rotary motion table. The temperature sensor may measure a temperature of the first rotary motion table. The controller may be operably coupled to the temperature sensor and the air conditioner, to control a temperature of the gas based on the temperature of the first rotary motion table. The temperature sensor may be a first temperature sensor, and the system may further include a second temperature sensor. In one implementation, the second temperature sensor may be in thermal communication with a coolant and/or cutting fluid supplied to a machine tool. The second temperature sensor may be operably coupled to the controller. The machine tool may be operably coupled to and positioned by the positioning system. The temperature measured by the second temperature sensor may be used as a temperature setpoint by the controller. In another implementation, the second temperature sensor may be in thermal communication with an ambient temperature and operably coupled to the controller. The temperature measured by the second temperature sensor may be used as a temperature setpoint by the controller.

The first channel in the positioning system may be labyrinthine. The positioning system may further include a shield. The shield may be disposed over an outlet of the first channel to prevent ingress of liquid into the first cavity.

The present invention includes a contaminant control system according to appended claim 1.

The moving components in the machine tool may include precision positioning components. The precision positioning components may include a first assembly and a second assembly. The first assembly includes a first rotatable portion that is rotatable about a first axis. The second assembly includes a second rotatable portion that is rotatable about a second axis that is not coincident with the first axis. The assemblies may be coupled such that rotation of the first rotatable portion causes eccentric rotation of the second rotatable portion about the first axis.

The contaminant control system further includes a temperature conditioner, as defined in appended claim 1.

The source supplying a gas flow in the contaminant control system may include a source of pressurized gas. The contaminant control system may further include a pressure regulator and a first valve. The pressure regulator may be disposed between the source and the channel. The first valve may be disposed between the source and the inlet and operably coupled to the controller. The source may comprise at least one of a fan or a blower.

Another aspect of the present invention includes a method of controlling contaminants in a machine tool, as defined in appended claim 8.

The method of controlling contaminants further includes conditioning a temperature of the gas flow and measuring a temperature within the enclosure, as defined in appended claim 8.

Other embodiments of the present technology include a contaminant control system. The contaminant control system includes a source, a channel, a positioning system, and a controller. The source supplies a gas flow. The channel is fluidly coupled to the source to direct the gas flow. The positioning system is fluidly coupled to the channel via an inlet disposed in the positioning system. The positioning system includes a first assembly, a second assembly, at least one outlet, and a first pressure sensor. The first assembly comprises a first rotatable portion that is rotatable about a first axis. The second assembly comprises a second rotatable portion that is rotatable about a second axis that is not coincident with the first axis. The at least one outlet is fluidly coupled to at least one of the first assembly or the second assembly to direct the gas flow out of the positioning system. The first pressure sensor is disposed within at least one of the first assembly or the second assembly. The controller is operably coupled to the gas compressor and the first pressure sensor. The gas flow prevents at least some contaminants from entering the positioning system. The contaminant control system may further include a temperature conditioner fluidly coupled to the channel to condition the temperature of the gas flow.

### BRIEF DESCRIPTIONS OF THE DRAWINGS

The skilled artisan will understand that the drawings primarily are for illustrative purposes and are not intended to limit the scope of the inventive subject matter described herein. The drawings are not necessarily to scale; in some instances, various aspects of the inventive subject matter disclosed herein may be shown exaggerated or enlarged in the drawings to facilitate an understanding of different features. In the drawings, like reference characters generally refer to like features (e.g., functionally and/or structurally similar elements).
FIG. 1 is a cross-sectional view of an eccentric positioning system with two rotary motion assemblies.
FIGS. 2A-2E illustrate operation, along a top view, of an eccentric positioning system with three rotary motion tables modeled as three bearings.
FIG. 3 is a cross-sectional view of a three-rotation eccentric positioning system integrated with a contaminant control system.
FIG. 4 is a cross-sectional view of five-rotation eccentric position system integrated with a contaminant control system.
FIG. 5 is a cross-sectional view of an alternative three-rotation eccentric position system integrated with a contaminant control system.
FIG. 6 is a schematic for a machine tool contaminant control system.
FIG. 7A shows part of an eccentric position system with an example of a labyrinthine channel creating a tortuous gas transport path.
FIG. 7B is a cross-sectional view of the labyrinthine channel in the eccentric position system in FIG. 7A.

### DETAILED DESCRIPTION

Inventive aspects of the present application include a contaminant control system that can be integrated with a positioning system, such as an eccentric positioning system. The contaminant control system prevents or substantially reduces the ingress of swarf, chips, filings, turnings, shavings, and/or contaminants into the positioning system. In this way, the contaminant control system prevents damage to and/or malfunction of the positioning system caused by contaminants entering the positioning system and fouling the positioning system's bearings, gears, encoders, and/or other components.

The contaminant control system prevents the ingress of contaminants into the positioning system by directing an inert gas flow through the interior of the positioning system. The contaminant control system controls the flow rate of the gas such that the gas pressure within the positioning system that is greater than the ambient air pressure. This overpressure causes the gas to flow out of any gaps, apertures, openings, slits, slots, and/or seams in the positioning system, preventing contaminants from entering the positioning system through those same gaps, apertures, openings, slits, slots, and/or seams.

The contaminant control system includes a controller that controls the gas flow through the positioning systems. The controller may be a programmable logic controller. This controller can be the same as or separate from the processor or controller that controls the positioning operations of the positioning system. The contaminant control system also includes one or more sensors positioned within the positioning system and coupled to the controller via analog-to-digital inputs to provide feedback to the controller. One or more gas regulators and valves may also be integrated with the system and coupled to the controller to provide control of the gas flow direction, volume of gas flow, speed of gas flow, and the internal pressure within the positioning system.

The contaminant control system can generate the inert gas flow using any of several sources and techniques. In one embodiment, the gas flow is created using a source of pressurized gas. For example, the pressurized gas may be supplied by a gas compressor (e.g., an industrial air compressor). As another example, the pressurized gas may be supplied by a pressurized gas cylinder. In this embodiment, the gas flow may be controlled with one or more gas regulators, valves, and/or bleed ports. In another embodiment, the gas flow is created with a fan or blower that blows ambient air through the positioning system. Any fan that creates sufficient air pressure may be used (e.g., a regenerative fan). In this case, a screen or filter prevents the fan or blower from sucking fine particles into the positioning system. In this embodiment, the gas flow may be controlled by varying the speed of the fan or blower. The contaminant control system can flow a pure gas or a mixture of gases through a positioning system. Examples of suitable gases include air, nitrogen, and argon. In one embodiment, a single gas flow source is coupled to several positioning systems. In another embodiment, several gas flow sources are coupled to a positioning system to provide greater gas flow or prevent downtime due to the failure of a gas flow source.

One or more gas flow channels are used to couple the source of the gas flow to the positioning system. The gas flow channels may include ducts, pipes, or tubing (e.g., PVC pipes or sheet metal ducts). The gas flow channels are sized according to the pressure and gas flow specifications. Gas flow channels can be joined together via connectors, adhesive, welding, and/or riveting. For example, PVC pipes can be joined via connectors and PVC adhesive. Metal ducts can be joined via welding, bolting, and/or riveting.

One or more valves may be disposed within the gas flow channels to control or regulate gas flow. Valves may include on/off control valves (e.g., ball valves, butterfly valves, diaphragm valves, gate valves, poppet valves, or solenoid valves) and/or metering valves (e.g., diaphragm valves, globe valves, needle valves, or solenoid valves). Valves may also include check valves, pressure reducing valves, and/or pressure relief valves.

At least one gas pressure sensor is integrated into the contaminant control system to provide feedback to the controller. This gas pressure sensor monitors the internal pressure within the positioning system. The controller may control the internal pressure within the positioning system so that the internal pressure remains at a desired internal pressure. For example, the desired internal pressure may be greater than about 0.5 inches of water (124.42 Pa) above ambient air pressure to about 100 inches of water (24884 Pa) above air pressure (e.g., 1.0, 2.5, 5.0, 10, 25, 50, or 75 inches of water, namely 248.84, 622.1, 1244.2, 2488.4, 6221, 12442 or 18663 Pa) Other gas pressure sensors may be placed along gas flow channels between the source of the gas and the positioning system. Many types of gas pressure sensors may be used, including piezoresistive strain gauges, capacitive pressure sensors, electromagnetic pressure sensors, and piezoelectric pressure sensors. In the case that a sensor fails, the gas flow source may default to a predetermined gas flow to create the targeted pressure range.

In addition to providing contaminant control, the contaminant control system may provide further benefits by providing temperature control. Machine tool precision and accuracy suffers if the temperature of the positioning system varies. Temperature changes cause thermal expansion and thermal contraction within the positioning system. These thermal effects degrade the machine tool's accuracy and precision. The accuracy and precision of a machine tool can be improved by controlling its temperature. Temperature control can prevent or reduce thermal effects.

The contaminant control system may provide temperature control by conditioning the temperature of the gas before and/or while the gas flows through the positioning system. By controlling the temperature of the gas, the type of gas, and the speed and volume of gas flow, the controller can also control the temperature of the positioning system. Gas from the gas flow source may be directed through a temperature conditioner before entering the positioning system. In one embodiment the temperature conditioner provides gas heating only, for example, using a heater. In another embodiment, the temperature conditioner provides both heating and cooling, for example, using a heat pump or combination heater and air conditioner. In another embodiment, the temperature conditioner provides cooling only, for example, using an air conditioner.

The contaminant control system also includes at least one temperature probe. The temperature probe is disposed within or in thermal communication with the positioning system to measure the temperature within the positioning system. The temperature probe may be in contact or not in contact with a surface of the positioning system. Preferably, the temperature probe is in direct contact with a surface of the positioning system. The temperature probe is coupled to the controller to provide feedback to control the temperature conditioner. Other temperature probes may be placed along the gas flow channels between the source of the gas and the positioning system. Any suitable type of temperature probe may be used, including thermocouples and thermistors.

In one embodiment, a temperature probe operably coupled to the controller is thermally coupled to a cutting, grinding, or milling tool mechanically coupled to and positioned by the positioning system. In this embodiment, the temperature probe may be disposed on a surface of the cutting, grinding, or milling tool and/or thermally coupled to a coolant or cutting fluid supplied to the cutting, grinding, or milling tool. The temperature of the coolant or cutting fluid supply may be set and controlled using a cutting, grinding, or milling tool controller. The temperature measured by the temperature probe thermally coupled to the cutting, grinding, or milling tool and/or the coolant or cutting fluid may be used as a temperature setpoint for the temperature conditioner coupled to the positioning system. The temperature conditioner providing both heating and cooling may condition the temperature of the gas to a range of temperatures in relation to the temperature of the coolant supply or the cutting, grinding, or milling tool. The range of temperatures may be within ±20°C of the temperature of the coolant supply or the cutting, grinding, or milling tool (e.g., ±0.1°C, ±0.25°C, ±0.5°C, ±1°C, ±2°C, ±5°C, or ±10°C). In this way, the temperature of the positioning system and the temperature of the cutting, grinding, or milling tool may be substantially similar to reduce detrimental effects caused by temperature variation.

In another embodiment, the temperature controller may be configured to heat the positioning system about 5 °C above ambient temperature to about 20 °C above ambient temperature. In this embodiment, a temperature probe operably coupled to the controller is thermally coupled to the ambient temperature. This embodiment is preferable where a consistent temperature in the position system is desirable and the contaminant control system does not include a cooling function. The contaminant control system may not include a cooling function in order to save on costs or space. In another embodiment, the temperature controller may be configured to maintain the positioning system at a temperature within 5 °C of the ambient temperature. This temperature range is preferable for grinding process control but uses both heating and cooling functions. In another embodiment, the temperature controller may be configured to maintain the positioning system at a temperature of about 5°C to about 20°C below the lowest expected ambient temperature. This embodiment is preferable where maintaining a temperature below the ambient temperature is preferred for all season operation.

The controller may use an algorithm to control the gas flow and the temperature of the gas. The controller may control heating, cooling, fan speed, and valves to control gas flow and temperature. The controller controls gas flow within a dead band limit set for one or more pressure sensors within the system. In the event of a pressure sensor failure, the controller reverts the flow rate of the gas to a default constant predetermined setting to substantially prevent contaminant ingress into the positioning system. The controller also controls the temperature of the system by turning the heater on when heat is demanded until the temperature measured at the outlet of the system reaches an upper set point, after which the heater is pulsed until the enclosure temperature remains within a temperature band.

If one of the temperature sensors fails, the temperature control system sends a warning to the operator and relies on other temperature sensors in the system. If all of the temperature probes fail, the controller sends a warning to the operator and stops temperature control.

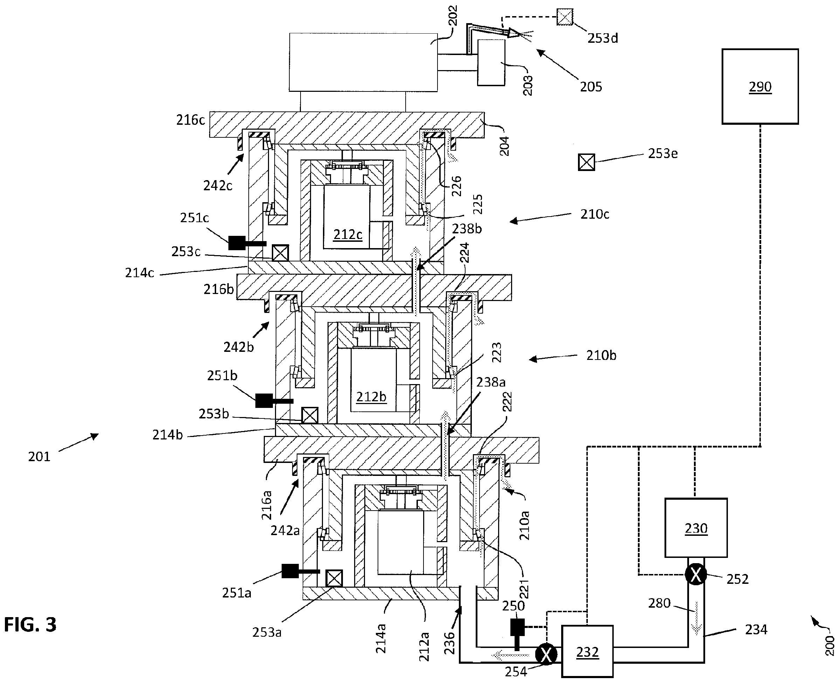

FIG. 3 is a cross-sectional view of a contaminant control system 200 integrated with an eccentric positioning system 201 with three rotary motion assemblies 210a-210c stacked to provide three eccentric rotary motions. Each rotary motion assembly 210 comprises a fixed portion or base 214 and a drive, motor, or actuator 212 that rotates a movable member or platform 216 with respect to the base 214. Each drive 212 has an optical encoder built into it for sensing the angular position of the platform 216 with respect to the base 214. Each drive 212 is in a cavity or enclosure formed by the base 214 and platform 216 of the corresponding rotary motion table 210. There are small (e.g., 0.5 mm wide) gaps, channels, conduits, or passages between 242a-242c between the respective bases 214 and platforms 216. The gaps 242 extend around the circumferences of the respective rotary motion tables 210 and serve as potential points of ingress for swarf and other contaminants into the cavities that contains the drives 212 and other moving parts of the rotary motion tables 210. Swarf and other contaminants can also obscure the optical encoders, deteriorating precision of the positioning system.

Bearings 221-226 positioned between the bases 214 and platforms 216 of the rotary motion tables 210 allow the rotary motion table platforms 214 to rotate freely with respect to their respective bases 216. For example, bearings 221 and 222 rotatably couple the platform 216a of the bottom rotary motion table 210a to the base 214a of the bottom rotary motion table 210a. This allows the platform 216a to rotate freely with respect to the base 214a.

The bearings 221-226 also allow the rotary motion assemblies 210a-210c to rotate freely (and eccentrically) with respect to each other because the base 214b of the middle rotary motion table 210b is fixed to the platform 216a of the bottom rotary motion table 210a and the base 214c of the top rotary motion table 210c is fixed to the platform 216b of the middle rotary motion table 210b. In this case, the bearings 221-226 are not nested one within the other, but nested bearings may be used in other embodiments of eccentric positioning systems.

The object to be positioned, e.g., a cutting or grinding tool 202, is mounted to an exterior surface 204 of the platform of the upper table 210c. The positioning system 201 accomplishes Z and X motions within the plane in which cutting tool 202 is mounted, as well as angular motion of the working end 203 of cutting tool 202 within that plane in a fashion like that illustrated in FIGS. 2A-2E.

The contaminant control system 200 includes a gas source 230, a duct 234 coupling the gas source 230 to the positioning system 201, a pressure sensor 251, and a controller 290. The contaminant control system 200 may additionally include a temperature conditioner 232, valves 252 and 254, and pressure sensor 250. The gas source 230, temperature conditioner 232, valves 252 and 254, and sensors 251 are operably coupled to the controller 290. The controller 290 controls the flow of gas 280 (indicated by arrows) from the gas source 230 into the positioning system 201 via an inlet 236. It also controls the temperature of the gas flow 280 as it leaves the temperature conditioner 232. Pressure sensors 251 may be placed in one or several rotary motion assemblies to provide additional feedback to the controller 290.

Temperature sensors 253a-253c may be disposed on an inner surface of the rotary motion assemblies near the gas outlets 242 and coupled to the controller 290. Temperature sensors 253a-253c may provide feedback to the controller 290 as part of a sensor feedback loop. The temperature sensor 253d may be disposed on a coolant supply nozzle 205 or otherwise thermally coupled to the coolant in the coolant supply nozzle that regulates the temperature of the cutting or grinding tool 202. Alternatively, temperature sensor 253d may be disposed on or otherwise thermally coupled to the cutting or grinding tool 202. For example, the temperature sensor 253d may be disposed on or near the working end 203 of the cutting tool. The temperature sensor 253d may provide feedback to the controller 290 that sets a targeted temperature range in relation to the temperature of the cutting or grinding tool 202 or the temperature of the coolant used in the cutting or grinding tool 202. The temperature sensor 253e measures ambient air temperature. Temperature sensor 253e may be operably coupled to the controller 290 to provide feedback to the controller 290 that sets a targeted temperature range in relation to the ambient air temperature.

In operation, the gas flow 280 enters the cavity in the bottom rotary motion table 210a through the channel 236. It increases the pressure inside the cavity to above the ambient air pressure (e.g., by about 0.5 inches H₂O , namely 124.42 Pa, above the ambient air pressure). As a result, the gas blows out of the cavity through the bearings 221 and 222 and the gap 242a between the base 214a and the platform 216a. This blowing gas flow 280 pushes swarf, chips, filings, and other small particles away from the gap 242a, preventing them from infiltrating the first rotary motion table 210a and jamming the bearings 221 and 222 and the drive 212a.

The gap, channel, or passage 242a may have a labyrinthine geometry to create a tortuous gas transport path. The gap 242a may be defined by structures to create several bends in the gas transport path. For example, the structures may create about 2 to about 20 bends in the gas transport path (e.g., 2, 3, 4, 5, 10, or 20 bends). The width or diameter of this path can be constant (e.g., 0.5 mm) or it can get narrower at discrete points (e.g., at the bends or corners) or it can narrow from the outside in. The structures may be adhered to the base 214a and/or the platform 216a via spot welding, bolts, clamps, and/or adhesives. The structures may be made of a metal that resists corrosion, plastic deformation, and denting (e.g., stainless steel). In addition to creating a tortuous gas transport path, the labyrinthine geometry also provides a barrier to prevent or reduce liquids (e.g., coolant, oil, or water) entering the cavity through the gap 242a.

A channel or passageway 238a through the platform 216a of the bottom rotary motion table 210a and the base 214b of the middle rotary motion table 210b connects the enclosure in the bottom rotary motion table 210a with the enclosure in middle rotary motion table 210b. Another channel or passageway 238b through the platform 216b of the middle rotary motion table 210b and the base 214c of the top rotary motion table 210c connects the enclosure in the middle rotary motion table 210b with the enclosure in top rotary motion table 210c. (Recall that the platform 216a is fixed to the base 214b, and the platform 216b is fixed to the base 214c.) This allows the gas flow 280 to propagate up through the interior of the stacked rotary motion tables 210, increasing the air pressure within the enclosures in the middle rotary motion table 210b and top rotary motion table 210c. The gas flows out of the interior through the bearings 222-226 and circumferential gaps 242b and 242c, stopping debris from penetrating the rotary motion tables 210 and clogging the bearings 222-226 and motors 212. The gaps, channels, conduits, or passages 242b and 242c may have a labyrinthine geometry to create a tortuous gas transport path that is identical or similar to the gap 242a described above.

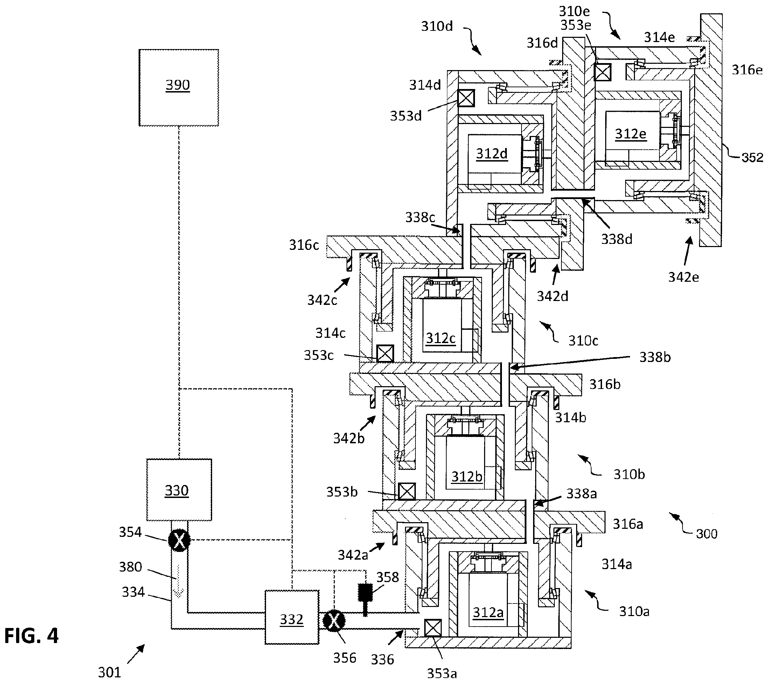

FIG. 4 shows another embodiment of a contaminant control system 301 integrated with a positioning system 300. The positioning system 300 controls the position in three-dimensional space and rotation about one axis of an object (e.g., a grinding wheel or other machine tool; not shown) coupled to rotated table member 352. System 300 comprises five rotary motion assemblies 310a-310e with respective motors 312a-312e, fixed bases 314a-314e, and rotating platforms 316a-316e. As in FIG. 3, each motor 312 is in a cavity formed between the corresponding base 314 and platform 316, with a circumferential gap 342 between the base 314 and platform 316.

The rotary motion assemblies 310 are stacked on top of each other, with the base 314 of each rotary motion assembly 310 fixed to the platform 316 of the rotary motion assembly 310 below. Assembly 310d is mounted such that its axis of rotation is orthogonal to the three noncoincident but parallel rotation axes of assemblies 310a-310c. The rotation axis of assembly 310e is parallel to, but not coincident with, that of assembly 310d. In each assembly 310, the motor 312 is fixed to the platform 316. One or more bearings (not labeled) between the base 314 and platform 316 allow the motor 312 to spin the platform 316 with respect to the base 314 about the assembly's 310 axis to provide five degrees of positioning freedom.

Like the contaminant control system 200 in FIG. 3, the contaminant control system 301 in FIG. 4 includes a gas source 330, a duct 334 coupling the gas source to the cavities in the rotary motion tables 310, and a controller 390. The contaminant control system may additionally include a temperature conditioner 332, valves 354 and 556, and pressure sensor 358. Any valves or temperature sensors present in the contaminant control system 301 are coupled to the controller. The controller 390 controls the flow of gas 380 from the gas source 330 and into the positioning system 300 via an inlet 336. Temperature sensors 353a-353c may be disposed on an inner surface of the rotary motion assemblies near the gas outlets 342 and coupled to the controller 390.

The positioning system 300 includes five enclosures, one in each rotary motion assembly 310, fluidly coupled together via channels or passageways 338a-338d. The gas 380 pressurizes these enclosures, with excess gas flowing between enclosures through the channels 338 and out of the enclosures via the bearings and gaps 342. This stops chips and other particles from entering the enclosures via the gaps 342 and getting caught in the bearings, motors 312, and/or other moving components in the positioning system 300. The gaps 342 may have a labyrinthine geometry to create a tortuous gas transport path as described above.

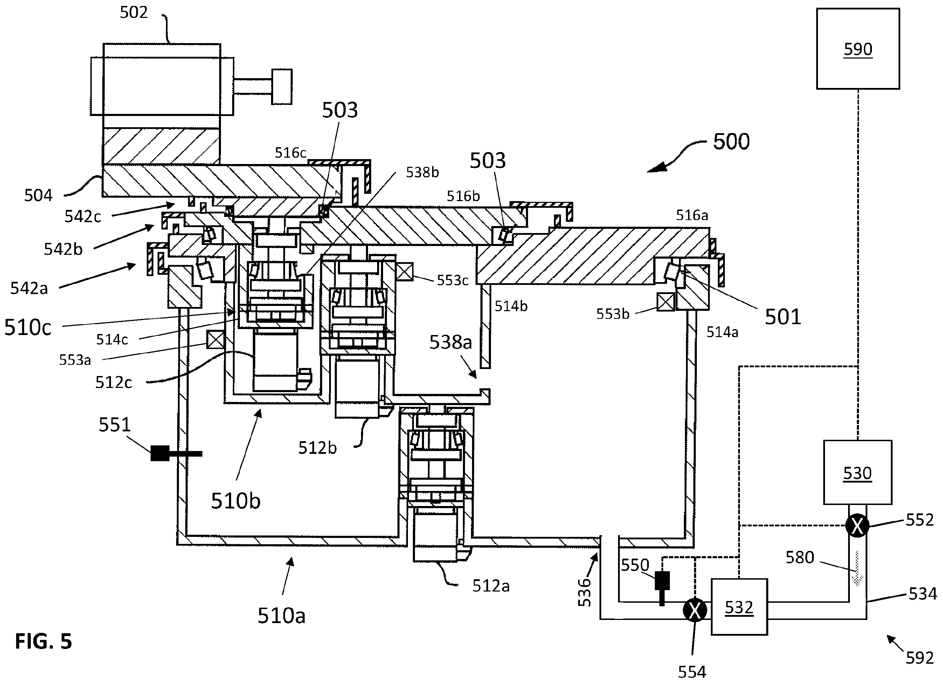

FIG. 5 shows another embodiment of a contaminant control system 592 integrated with an eccentric positioning system 500 with three nested rotary motion tables 510a-510c. The rotary motion tables 510a-510c includes respective motors 512a-512c, fixed bases 514a-514c, and rotating platforms 516a-516c. The motors 512a-512c are laterally offset from one another sufficiently such that they do not need to be stacked as in other versions of positioning systems. The motors 512a-512c are sealed such that contamination is not significant and the gas 580 does not flow through the motors. The lateral offset of the motors decreases the height of the system.

As in the other systems, the motors 512 spin the respective platforms 516 about offset, parallel axes of rotation. Bearings 501, 503, and 505 allow the platforms 516 to rotate freely with respect to the bases 514. The base 514b of the middle rotary motion table 514b is fixed to the platform 516a of the bottom rotary motion table 514a and the base 514c of the top rotary motion table 514c is fixed to the platform 516b of the middle rotary motion table 514b, so actuating the motors 512 causes the platforms 516 to move with respect to each other. The positioning system 500 accomplishes Z, X, and angular positioning of cutting tool 512 in the plane of the cutting tool that is parallel to rotated member 510.

The contaminant control system 592 includes a gas source 530, a duct 534 coupling the gas source to the positioning system 500, a pressure sensor 551, and a controller 590. The contaminant control system may additionally include a temperature conditioner 532, valves 552 and 554, and pressure sensor 550. Any valves or temperature sensors present in the contaminant control system are coupled to the controller to provide feedback. The controller 590 controls the flow of gas 580 from the gas source 530 and into the positioning system 500 via an inlet 536. Pressure sensor 551 may be placed in a rotary motion assembly to provide additional feedback to the controller 590. Temperature sensors 553a-553c may be disposed on an inner surface of the rotary motion assemblies near the gas outlets 542.

The gas 580 pressurizes three enclosures or cavities in the positioning system 500: a first cavity between base 514a and platform 516a, a second cavity between base 514b and platform 516b, and a third cavity between base 514c and platform 516c. The first cavity is fluidly coupled to the second cavity via channel 538a, and the second cavity is fluidly coupled to the third cavity via channel 538c. The positioning system 500 includes circumferential outlets 542a-542c between the bases 514 and platforms 516 that allow the gas to exit the pressurized cavities. The gas blows out of these outlets 542, preventing contamination from entering them. The gaps 542 may have a labyrinthine geometry to create a tortuous gas transport path as described above.

Any type of machine tool (e.g., milling, grinding, or turning machines) where contaminants are a concern may be designed with or modified to include a contaminant control system according to the inventive aspects of the present application. The contaminant control system is applicable to any machine with moving parts where contaminants may be generated, not just positioning systems.

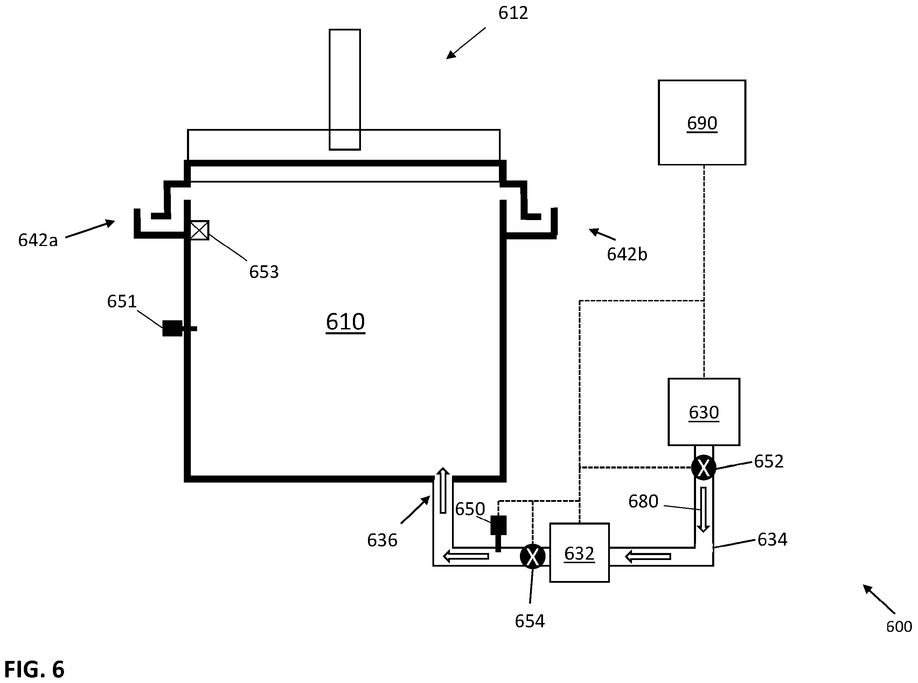

FIG. 6 shows an embodiment of a contaminant control system 600 integrated with a machine tool enclosure 610. Cutting, grinding, and/or milling machine tool components 612 are coupled to the machine tool enclosure 610. Any number of internal components of a machine tool may be disposed in the machine tool enclosure 610, with any components that produce swarf or chips (i.e., cutting, grinding, and/or milling components 612) outside of the enclosure. The contaminant control system reduces or substantially prevents contaminants such as swarf from entering the machine tool enclosure 610. The contaminant control system includes a gas source 630, a duct 634 coupling the gas source to the machine tool enclosure, a pressure sensor 651, and a controller 690. The contaminant control system may additionally include a temperature conditioner 632, valves 652 and 654, and pressure sensor 650. Any valves or temperature sensors present in the contaminant control system are coupled to the controller. The controller controls the flow of gas 680 from the gas source 630 and into the machine tool enclosure 610 via an inlet 636. The machine tool includes at least one outlet for the gas to exit the machine tool. The gas outlets are positioned at the locations where the cutting, grinding, and/or milling components 612 couple to enclosure 610. The gas outlets have a labyrinthine geometry to create a tortuous gas transport path. In some embodiments, the outlet is circumferential. In other embodiments, the machine tool includes at least two outlets 642a and 642b.

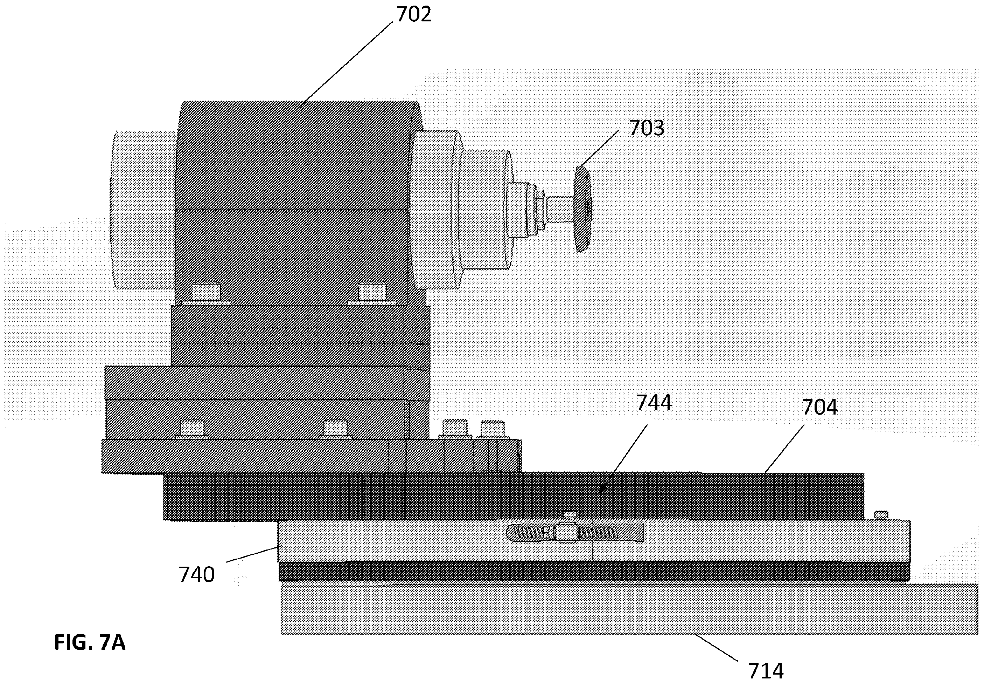

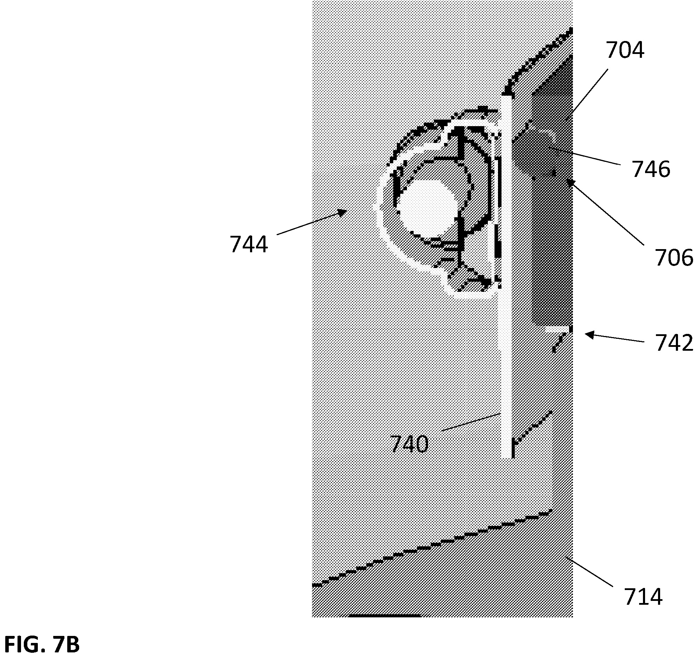

FIG. 7A shows part of an eccentric position system with an example of a labyrinthine structure at the gap between the base 714 and the movable platform 704 near the location of the bearings. The movable platform 704 supports an object to be positioned, e.g., a cutting or grinding tool 702, mounted to an exterior surface of the platform 704, with a working end 703 that the system positions with respect to a workpiece (e.g., a bearing race). In this example, the labyrinthine structure is formed in part by a shield or metal band 740 disposed over the gap 742 between the base 714 and the platform 704. The metal band 740 is held in place with a hose clamp spot welded to a side of the metal band and tightened down onto the outer edge of the platform 704 near the gap 742. The outer edge of the platform 704 includes a circumferential groove 706 near the gap 742. In one embodiment, an O-ring 746 is disposed in the groove 706 between the metal band 740 and the platform 704. In another embodiment, a bead of sealant (e.g., polyurethane sealant, or silicone sealant) is disposed in the groove 706 between the metal band 740 and the platform 704.

The metal band 740 creates a labyrinthine geometry to create a tortuous gas transport path. The metal band 740 is made of a metal that resists corrosion, plastic deformation, and denting (e.g., stainless steel or titanium). In addition to creating a tortuous gas transport path, the labyrinthine geometry also provides a barrier to prevent or reduce liquids (e.g., coolant, oil, or water) splashing into the cavity of the positioning system through the gap 742. The metal band 740 has a thickness of about 0.25 mm to about 5 mm (e.g., 0.25 mm, 0.4 mm, 0.5 mm, 1.0 mm, 3 mm, or 5 mm). The width of the metal band 740 may be about 10 times to about 1000 times bigger than the width of the gap 742 (e.g., 10, 50, 100, 500, 1000 times bigger).

In some embodiments a more tortuous gas transport path is desirable. A more tortuous gas transport path may be created by disposing a wavy or corrugated band of metal over the gap 742, where the gas flows across the surface of the wavy metal to exit the positioning system. The wavy metal band may create U-shaped or W-shaped bends in the gas transport path. A more tortuous gas transport path may also be created by layering several metal bands to create several U-shaped bends in the gas transport path.

## Claims

1. A contaminant control system (200,301,592,600) comprising:
a source (230,330,530,630) supplying a gas flow (280,380,580,680);
a channel fluidly coupled to the source (230,330,530,630) to direct the gas flow (280,380,580,680);
a pressure sensor disposed within the channel;
a machine tool comprising:
an enclosure comprising:
moving components disposed within the enclosure;
an inlet fluidly coupling the channel and the enclosure; and
at least one outlet to direct the gas flow out of the enclosure; and
a cutting tool disposed on an outside surface of the enclosure and operably coupled to the moving components;
a controller (290,390,590,690) operably coupled to the source (230,330,530,630) and the pressure sensor;
a temperature conditioner (232,332,532,632) fluidly coupled to the channel and operably coupled to the controller (290,390,590,690), the temperature conditioner (232,332,532,632) configured to condition a temperature of the gas flow (280,380,580,680) by at least one of:
heating the gas flow (280,380,580,680) to about 5°C above an ambient temperature to about 20°C above the ambient temperature;
conditioning the temperature of the gas flow (280,380,580,680) between about 5°C less than or greater than an ambient temperature; or
cooling the temperature of the gas flow (280,380,580,680) to about 5°C below an ambient temperature to about 20°C below the ambient temperature; and
at least one temperature probe disposed within the enclosure and operably coupled to the controller (290,390,590,690),
wherein the gas flow (280,380,580,680) prevents at least some contaminants generated by the cutting tool from entering the enclosure.

2. The contaminant control system (200,301,592,600) of claim 1, wherein the moving components comprise precision positioning components.

3. The contaminant control system (200,301,592,600) of claim 2, wherein the precision positioning components comprise:
a first assembly comprising a first rotatable portion that is rotatable about a first axis;
a second assembly comprising a second rotatable portion that is rotatable about a second axis that is not coincident with the first axis,
wherein the assemblies are coupled such that rotation of the first rotatable portion causes eccentric rotation of the second rotatable portion about the first axis.

4. The contaminant control system (200,301,592,600) of claim 1, wherein the at least some contaminants comprise at least one of machining chips or grinding swarf.

5. The contaminant control system (200,301,592,600) of claim 1, wherein the gas flow (280,380,580,680) creates a pressure within the enclosure of about 124.42 Pa (0.5 inches of water) to about 24884 Pa (100 inches of water) above an ambient pressure.

6. The contaminant control system (200,301,592,600) of claim 1, wherein:
the source (230,330,530,630) comprises a source of pressurized gas; and
the contaminant control system (200,301,592,600) further comprises:
a pressure regulator disposed between the source (230,330,530,630) and the channel; and
a valve disposed between the source (230,330,530,630) and the inlet and operably coupled to the controller (290,390,590,690).

7. The contaminant control system (200,301,592,600) of claim 1, wherein the source (230,330,530,630) comprises at least one of a fan or a blower.

8. A method of controlling contaminants in a machine tool, the machine tool comprising:
an enclosure comprising:
moving components disposed within the enclosure;
an inlet fluidly coupling the enclosure to a source (230,330,530,630) supplying a gas flow (280,380,580,680) to direct the gas flow into the enclosure;
a pressure sensor disposed within the enclosure; and
at least one outlet to direct the gas flow (280,380,580,680) out of the enclosure;
and
a cutting tool disposed on an outside surface of the enclosure and operably coupled to the moving components;
the method of controlling contaminants comprising:
regulating the gas flow (280,380,580,680) through the machine tool using a controller (290,390,590,690), the controller (290,390,590,690) operably coupled to the pressure sensor and the source (230,330,530,630) supplying the gas flow (280,380,580,680);
conditioning a temperature of the gas flow (280,380,580,680) using a temperature conditioner (232,332,532,632) operably coupled to the controller (290,390,590,690) by at least one of:
heating the gas flow (280,380,580,680) to about 5°C above an ambient temperature to about 20°C above the ambient temperature;
conditioning the temperature of the gas flow (280,380,580,680) between about 5°C less than or greater than an ambient temperature; or
cooling the gas flow (280,380,580,680) to about 5°C below an ambient temperature to about 20°C below the ambient temperature; and
measuring a temperature within the enclosure with a temperature probe operably coupled to the controller (290,390,590,690),
wherein the gas flow (280,380,580,680) prevents at least some contaminants generated by the cutting tool from entering the enclosure.

9. The method of controlling contaminants of claim 8, wherein the moving components comprise precision positioning components.

10. The method of controlling contaminants of claim 9, wherein the precision positioning components comprise:
a first assembly comprising a first rotatable portion that is rotatable about a first axis;
a second assembly comprising a second rotatable portion that is rotatable about a second axis that is not coincident with the first axis,
wherein the assemblies are coupled such that rotation of the first rotatable portion causes eccentric rotation of the second rotatable portion about the first axis.

11. The method of controlling contaminants of claim 8, wherein the at least some contaminants comprise at least one of machining chips or grinding swarf.

12. The method of controlling contaminants of claim 8, wherein controlling the gas flow (280,380,580,680) comprises creating a pressure within the enclosure of about 124.42 Pa (0.5 inches of water) above an ambient pressure to about 24884 Pa (100 inches of water) above the ambient pressure.

## Patentansprüche

1. Kontaminantenkontrollsystem (200,301,592,600) umfassend:
eine Quelle (230,330,530,630), die einen Gasstrom (280,380,580,680) liefert;
einen Kanal, der fluidisch an die Quelle (230,330,530,630) gekoppelt ist, um den Gasstrom (280,380,580,680) zu leiten;
einen Drucksensor, der in dem Kanal angeordnet ist;
ein Maschinenwerkzeug umfassend:
ein Gehäuse umfassend:
bewegliche Komponenten, die in dem Gehäuse angeordnet sind;
einen Einlass, der den Kanal und das Gehäuse fluidisch koppelt; und
wenigstens einen Auslass zum Leiten des Gasstroms aus dem Gehäuse; und
ein Schneidwerkzeug, das an einer Außenfläche des Gehäuses angeordnet und mit den beweglichen Komponenten wirkgekoppelt ist;
eine Steuerung (290,390,590,690), die mit der Quelle (230,330,530,630) und dem Drucksensor wirkgekoppelt ist;
eine Temperaturkonditioniervorrichtung (232,332,532,632), die fluidisch an den Kanal gekoppelt ist und mit der Steuerung (290,390,590,690) wirkgekoppelt ist, wobei die Temperaturkonditioniervorrichtung (232,332,532,632) dazu ausgelegt ist, eine Temperatur des Gasstroms (280,380,580,680) durch wenigstens eines zu konditionieren von:
Erhitzen des Gasstroms (280,380,580,680) auf etwa 5 °C über einer Umgebungstemperatur bis etwa 20 °C über der Umgebungstemperatur;
Konditionieren der Temperatur des Gasstroms (280,380,580,680) zwischen etwa 5 °C niedriger oder höher als eine Umgebungstemperatur; oder
Kühlen der Temperatur des Gasstroms (280,380,580,680) auf etwa 5 °C unter einer Umgebungstemperatur bis etwa 20 °C unter der Umgebungstemperatur; und
wenigstens eine Temperatursonde, die in dem Gehäuse angeordnet und mit der Steuerung (290,390,590,690) wirkgekoppelt ist,
wobei der Gasstrom (280,380,580,680) verhindert, dass wenigstens manche durch das Schneidwerkzeug erzeugten Kontaminanten in das Gehäuse eintreten.

2. Kontaminantenkontrollsystem (200,301,592,600) nach Anspruch 1, wobei die beweglichen Komponenten Präzisions-Positionierkomponenten umfassen.

3. Kontaminantenkontrollsystem (200,301,592,600) nach Anspruch 2, wobei die Präzisions-Positionierkomponenten umfassen:
eine erste Baugruppe, die einen ersten drehbaren Abschnitt umfasst, der um eine erste Achse drehbar ist;
eine zweite Baugruppe, die einen zweiten drehbaren Abschnitt umfasst, der um eine zweite Achse drehbar ist, die nicht mit der ersten Achse zusammenfällt,
wobei die Baugruppen so gekoppelt sind, dass Drehung des ersten drehbaren Abschnitts exzentrische Drehung des zweiten drehbaren Abschnitts um die erste Achse bewirkt.

4. Kontaminantenkontrollsystem (200,301,592,600) nach Anspruch 1, wobei die wenigstens manchen Kontaminanten wenigstens eines von Bearbeitungsspänen oder Schleifschlamm umfassen.

5. Kontaminantenkontrollsystem (200,301,592,600) nach Anspruch 1, wobei der Gasstrom (280,380,580,680) einen Druck in dem Gehäuse von etwa 124,42 Pa (0,5 Zoll Wasser) bis etwa 24.884 Pa (100 Zoll Wasser) über einem Umgebungsdruck erzeugt.

6. Kontaminantenkontrollsystem (200,301,592,600) nach Anspruch 1, wobei:
die Quelle (230,330,530,630) eine Druckgasquelle umfasst; und
das Kontaminantenkontrollsystem (200,301,592,600) ferner umfasst:
einen Druckregler, der zwischen der Quelle (230,330,530,630) und dem Kanal angeordnet ist; und
ein Ventil, das zwischen der Quelle (230,330,530,630) und dem Einlass angeordnet und an die Steuerung (290,390,590,690) wirkgekoppelt ist.

7. Kontaminantenkontrollsystem (200,301,592,600) nach Anspruch 1, wobei die Quelle (230,330,530,630) wenigstens eines von einem Lüfter und einem Gebläse umfasst.

8. Verfahren zum Kontrollieren von Kontaminanten in einer Werkzeugmaschine, wobei die Werkzeugmaschine umfasst:
ein Gehäuse umfassend:
bewegliche Komponenten, die in dem Gehäuse angeordnet sind;
einen Einlass, der das Gehäuse fluidisch an eine Quelle (230,330,530,630) koppelt, die einen Gasstrom (280,380,580,680) liefert, um den Gasstrom in das Gehäuse zu leiten;
einen Drucksensor, der in dem Gehäuse angeordnet ist; und
wenigstens einen Auslass, um den Gasstrom (280,380,580,680) aus dem Gehäuse zu leiten; und
ein Schneidwerkzeug, das an einer Außenfläche des Gehäuses angeordnet und mit den beweglichen Komponenten wirkgekoppelt ist;
wobei das Verfahren zum Kontrollieren von Kontaminanten umfasst:
Regulieren des Gasstroms (280,380,580,680) durch die Werkzeugmaschine unter Verwendung einer Steuerung (290,390,590,690), wobei die Steuerung (290,390,590,690) an den Drucksensor und die Quelle (230,330,530,630), die den Gasstrom (280,380,580,680) liefert, wirkgekoppelt ist;
Konditionieren einer Temperatur des Gasstroms (280,380,580,680) unter Verwendung einer Temperaturkonditioniervorrichtung (232,332,532,632), die an die Steuerung (290,390,590,690) wirkgekoppelt ist, durch wenigstens eines von:
Erhitzen des Gasstroms (280,380,580,680) auf etwa 5 °C über einer Umgebungstemperatur bis etwa 20 °C über der Umgebungstemperatur;
Konditionieren der Temperatur des Gasstroms (280,380,580,680) zwischen etwa 5 °C niedriger oder höher als eine Umgebungstemperatur; oder
Kühlen des Gasstroms (280,380,580,680) auf etwa 5 °C unter einer Umgebungstemperatur bis etwa 20 °C unter der Umgebungstemperatur; und
Messen einer Temperatur in dem Gehäuse mit einer Temperatursonde, die an die Steuerung (290,390,590,690) wirkgekoppelt ist,
wobei der Gasstrom (280,380,580,680) verhindert, dass wenigstens manche durch das Schneidwerkzeug erzeugten Kontaminanten in das Gehäuse eintreten.

9. Verfahren zum Kontrollieren von Kontaminanten nach Anspruch 8, wobei die beweglichen Komponenten Präzisions-Positionierkomponenten umfassen.

10. Verfahren zum Kontrollieren von Kontaminanten nach Anspruch 9, wobei die Präzisions-Positionierkomponenten umfassen:
eine erste Baugruppe, die einen ersten drehbaren Abschnitt umfasst, der um eine erste Achse drehbar ist;
eine zweite Baugruppe, die einen zweiten drehbaren Abschnitt umfasst, der um eine zweite Achse drehbar ist, die nicht mit der ersten Achse zusammenfällt,
wobei die Baugruppen so gekoppelt sind, dass Drehung des ersten drehbaren Abschnitts exzentrische Drehung des zweiten drehbaren Abschnitts um die erste Achse bewirkt.

11. Verfahren zum Kontrollieren von Kontaminanten nach Anspruch 8, wobei die wenigstens manchen Kontaminanten wenigstens eines von Bearbeitungsspänen oder Schleifschlamm umfassen.

12. Verfahren zum Kontrollieren von Kontaminanten nach Anspruch 8, wobei Steuern des Gasstroms (280,380,580,680) Erzeugen eines Drucks in dem Gehäuse von etwa 124,42 Pa (0,5 Zoll Wasser) über einem Umgebungsdruck bis etwa 24.884 Pa (100 Zoll Wasser) über dem Umgebungsdruck umfasst.

## Revendications

1. Système de régulation de contaminants (200, 301, 592, 600) comprenant :
une source (230, 330, 530, 630) fournissant un flux de gaz (280, 380, 580, 680) ;
un canal couplé fluidiquement à la source (230, 330, 530, 630) pour diriger le flux de gaz (280, 380, 580, 680) ;
un capteur de pression disposé à l'intérieur du canal ;
une machine-outil comprenant :
une enceinte comprenant :
des composants mobiles disposés à l'intérieur de l'enceinte ;
une entrée reliant fluidiquement le canal et l'enceinte ; et
au moins une sortie pour diriger le flux de gaz hors de l'enceinte ; et
un outil de coupe disposé sur une surface extérieure de l'enceinte et couplé de manière fonctionnelle aux composants mobiles ;
un dispositif de commande (290, 390, 590, 690) couplé de manière fonctionnelle à la source (230, 330, 530, 630) et au capteur de pression ;
un conditionneur de température (232, 332, 532, 632) couplé fluidiquement au canal et couplé fonctionnellement au dispositif de commande (290, 390, 590, 690), le conditionneur de température (232, 332, 532, 632) étant configuré pour conditionner une température du flux de gaz (280, 380, 580, 680) par au moins l'une des actions suivantes :
le chauffage du flux de gaz (280, 380, 580, 680) d'environ 5 °C au-dessus d'une température ambiante à environ 20 °C au-dessus de la température ambiante ;
le conditionnement de la température du flux de gaz (280, 380, 580, 680) entre environ 5 °C inférieure ou supérieure à une température ambiante ; ou
le refroidissement de la température du flux de gaz (280, 380, 580, 680) d'environ 5 °C en dessous d'une température ambiante à environ 20 °C en dessous de la température ambiante ; et
au moins une sonde de température disposée à l'intérieur de l'enceinte et couplée fonctionnellement au dispositif de commande (290, 390, 590, 690),
le flux de gaz (280, 380, 580, 680) empêchant au moins certains contaminants générés par l'outil de coupe de pénétrer dans l'enceinte.

2. Système de régulation de contaminants (200, 301, 592, 600) selon la revendication 1, les composants mobiles comprenant des composants de positionnement de précision.

3. Système de régulation de contaminants (200, 301, 592, 600) selon la revendication 2, les composants de positionnement de précision comprenant :
un premier ensemble comprenant une première partie rotative qui peut tourner autour d'un premier axe ;
un second ensemble comprenant une seconde partie rotative qui peut tourner autour d'un second axe non confondu avec le premier axe,
les ensembles étant couplés de telle sorte que la rotation de la première partie rotative provoque une rotation excentrique de la seconde partie rotative autour du premier axe.

4. Système de régulation de contaminants (200, 301, 592, 600) selon la revendication 1, les au moins certains contaminants comprenant au moins un élément parmi des copeaux d'usinage ou des copeaux de meulage.

5. Système de régulation de contaminants (200, 301, 592, 600) selon la revendication 1, le flux de gaz (280, 380, 580, 680) créant une pression à l'intérieur de l'enceinte d'environ 124,42 Pa (0,5 pouce d'eau) à environ 24884 Pa (100 pouces d'eau) au-dessus d'une pression ambiante.

6. Système de régulation de contaminants (200, 301, 592, 600) selon la revendication 1,
la source (230, 330, 530, 630) comprenant une source de gaz sous pression ; et
le système de régulation de contaminants (200, 301, 592, 600) comprenant en outre :
un régulateur de pression disposé entre la source (230, 330, 530, 630) et le canal ; et
une soupape disposée entre la source (230, 330, 530, 630) et l'entrée et couplée fonctionnellement au dispositif de commande (290, 390, 590, 690).

7. Système de régulation de contaminants (200, 301, 592, 600) selon la revendication 1, la source (230, 330, 530, 630) comprenant au moins un ventilateur ou une soufflante.

8. Procédé de régulation de contaminants dans une machine-outil, la machine-outil comprenant :
une enceinte comprenant :
des composants mobiles disposés à l'intérieur de l'enceinte ;
une entrée raccordant fluidiquement l'enceinte à une source (230, 330, 530, 630) fournissant un flux de gaz (280, 380, 580, 680) pour diriger le flux de gaz dans l'enceinte ;
un capteur de pression disposé à l'intérieur de l'enceinte ; et
au moins une sortie pour diriger le flux de gaz (280, 380, 580, 680) hors de l'enceinte ; et
un outil de coupe disposé sur une surface extérieure de l'enceinte et couplé de manière fonctionnelle aux composants mobiles ;
le procédé de régulation de contaminants comprenant :
la régulation du flux de gaz (280, 380, 580, 680) à travers la machine-outil à l'aide d'un dispositif de commande (290, 390, 590, 690), le dispositif de commande (290, 390, 590, 690) étant couplé de manière fonctionnelle au capteur de pression et à la source (230, 330, 530, 630) fournissant le flux de gaz (280, 380, 580, 680) ;
le conditionnement d'une température du flux de gaz (280, 380, 580, 680) à l'aide d'un conditionneur de température (232, 332, 532, 632) couplé fonctionnellement au dispositif de commande (290, 390, 590, 690) par au moins l'une des actions suivantes :
le chauffage du flux de gaz (280, 380, 580, 680) d'environ 5 °C au-dessus d'une température ambiante à environ 20 °C au-dessus de la température ambiante ;
le conditionnement de la température du flux de gaz (280, 380, 580, 680) entre environ 5 °C inférieure ou supérieure à une température ambiante ; ou
le refroidissement du flux de gaz (280, 380, 580, 680) d'environ 5 °C en dessous d'une température ambiante à environ 20 °C en dessous de la température ambiante ; et
la mesure d'une température à l'intérieur de l'enceinte à l'aide d'une sonde de température couplée fonctionnellement au dispositif de commande (290, 390, 590, 690),
le flux de gaz (280, 380, 580, 680) empêchant au moins certains contaminants générés par l'outil de coupe de pénétrer dans l'enceinte.

9. Procédé de régulation de contaminants selon la revendication 8, les composants mobiles comprenant des composants de positionnement de précision.

10. Procédé de régulation de contaminants selon la revendication 9, les composants de positionnement de précision comprenant :
un premier ensemble comprenant une première partie rotative qui peut tourner autour d'un premier axe ;
un second ensemble comprenant une seconde partie rotative qui peut tourner autour d'un second axe non confondu avec le premier axe,
les ensembles étant couplés de telle sorte que la rotation de la première partie rotative provoque une rotation excentrique de la seconde partie rotative autour du premier axe.

11. Procédé de régulation de contaminants selon la revendication 8, les au moins certains contaminants comprenant au moins un élément parmi des copeaux d'usinage ou des copeaux de meulage.

12. Procédé de régulation de contaminants selon la revendication 8, la régulation du flux de gaz (280, 380, 580, 680) comprenant la création d'une pression à l'intérieur de l'enceinte d'environ 124,42 Pa (0,5 pouce d'eau) au-dessus d'une pression ambiante à environ 24884 Pa (100 pouces d'eau) au-dessus de la pression ambiante.
